Europäisches Patentamt

European Patent Office

Office européen des brevets

(19)

(11) Veröffentlichungsnummer: **0 088 317**
A1

(12) **EUROPÄISCHE PATENTANMELDUNG**

(21) Anmeldenummer: **83101905.4**

(22) Anmeldetag: **26.02.83**

(51) Int. Cl.³: **A 61 J 3/00,** A 23 G 3/26

(30) Priorität: **05.03.82 DE 3207869**

(43) Veröffentlichungstag der Anmeldung: **14.09.83**
**Patentblatt 83/37**

(84) Benannte Vertragsstaaten: **IT**

(71) Anmelder: **Boehringer Mannheim GmbH,
Sandhoferstrasse 116, D-6800 Mannheim 31 (DE)**

(72) Erfinder: **Preis, Walter, Daimlerstrasse 2,
D-6840 Lampertheim (DE)**

(54) **Vorrichtung zum Überziehen eines Dragiergutes.**

(57) Vorrichtung zum Überziehen eines Dragiergutes (22) aus Formlingen (26) wie Tabletten, Pellets und dgl. Sie hat eine Einrichtung (29) zum Besprühen der Formlinge (26) mit einer Dragiersuspension, während die Formlinge (26) in dem Kessel (12) bewegt werden, und eine Absaugeinrichtung (24) zum Absaugen von Luft und Drageestaub. Die Drehachse (A) des Kessels (12) ist geneigt, so daß das Dragiergut in bekannter Weise eine dreidimensionale Schlingerbewegung durchführt, bei der das aufsteigende Gut (50) sich im Mittel in einer größeren Entfernung von der Achse (A) als das ablaufende Gut (52) befindet. Eine besonders effektive Absaugung im Sinne einer schnellen und qualitativ hochwertigen Dragierung wird dadurch erzielt, daß die Absaugeinrichtung (24) eine oder mehrere perforierte Trennwände (30) einschließt, die im Innern des Kessels (12) so angebracht sind, daß sie während der Drehbewegung des Kessels (12) vom ablaufenden Dragiergut (52) überströmt werden. Die Luftabfuhr hinter den Trennwänden (30) ist dabei derart gesteuert, daß momentan nicht mit dem Dragiergut (22) in Kontakt stehende Teile der perforierten Trennwände (30) im wesentlichen nicht mit Unterdruck beaufschlagt sind, so daß ein großer Teil der Luft durch das ablaufende Gut (52) hindurchströmt.

BOEHRINGER MANNHEIM GMBH                    2088317

## Vorrichtung zum Überziehen eines Dragiergutes

Die vorliegende Erfindung betrifft eine Vorrichtung zum Überziehen eines Dragiergutes aus Formlingen, wie Tabletten, Pellets, Kapseln und dergl. mit einem um eine Achse drehbaren Kessel, eine Einrichtung zum Besprühen der Formlinge mit einer Dragiersuspension, während die Formlinge in dem Kessel bewegt werden und einer Absaugeinrichtung zum Absaugen von Luft und Drageestaub durch mindestens einen Teil des Dragiergutes hindurch, wobei die Drehachse des Kessels derart geneigt ist, daß das Dragiergut eine dreidimensionale Schlingerbewegung durchführt, bei der das aufsteigende Gut sich im Mittel in einer größeren Entfernung von der Achse als das ablaufende Gut befindet.

Insbesondere bei der Herstellung von Arzneimitteln, beispielsweise aber auch bei der Produktion von Süßigkeiten, werden geeignete Grundkörper, wie beispielsweise Tabletten, Pellets, Granulate und dergl., die im folgenden zusammenfassend als Formlinge bezeichnet werden, häufig mit einer geeigneten, ungiftigen Substanz, wie beispielsweise Zucker, Schellack oder Gummi arabicum überzogen und oft auch gefärbt. Heute werden als Um- hüllungsmaterialien häufig auch Polymere, beispiels- weise Methylcellulose oder Acrylharzlacke verwendet. Die überzogenen Formlinge werden als Dragees, bei sehr dünner Beschichtung häufig auch als Filmdragees

(in der angelsächsischen Literatur coated tablets)
bezeichnet.

Insbesondere an Arzneimitteldragees werden hohe Anforderungen gestellt. Die aufgebrachte Schicht dient
beispielsweise dazu, unangenehm schmeckende Arzneimittel mit einer angenehm schmeckenden Hülle zu versehen. Darüberhinaus wird in vielen Fällen durch die
Wahl des Dragiermaterials gesteuert, ob sich das
Dragee im Magen, im Dünndarm oder erst im Dickdarm
auflöst. Insbesondere bei den Filmdragees ist die
aufgebrachte Schicht sehr dünn, beispielsweise werden
auf eine Tablette von ca. 9 mm Durchmesser nur 10 mg
Beschichtung aufgebracht. Es ist ohne weiteres einsichtig, daß unter solchen Umständen die Beschichtung
gleichmäßig stark und glatt sein muß, damit die Beschichtung ihre
Aufgaben erfüllt. Etwaige Rauhigkeiten sind darüberhinaus nicht nur
wegen des optischen Eindrucks unerwünscht, sondern sie können auch
zu Problemen beim Bedrucken oder Abfüllen der Dragees führen.

Trotz dieser hohen Anforderungen sollen die Dragees
in möglichst wirtschaftlicher Weise hergestellt werden,
was zu immer größeren Dragierkesseln führte. Dabei
wurden die Schichten der in einem Kessel bewegten
Dragees immer dicker und dies führte zu Problemen,
einerseits wegen des dadurch erhöhten Abriebs der
Formlinge und andererseits dadurch, daß derartig dicke
Dragiergutschichten verhältnismäßig schwer gleichzeitig
oder abwechselnd zu besprühen und mit einem in geeigneter Weise geführten Luftstrom zu trocknen sind.

Um diese Probleme zu vermeiden, wurde  bereits eine
Vielzahl von Vorschlägen gemacht, die sich im wesentlichen auf die Form der Dragierkessel und auf die
Neigung ihrer Drehachse, sowie auf die Führung des
Luftstroms erstrecken. Ein guter Überblick über mögliche Formen von Dragierkesseln ist der DE-AS
27 31 351 zu entnehmen. Während die Trocknungsluft
bei älteren Dragierkesseln häufig einfach durch in
den Kessel hineinragende Rohre auf die Oberfläche
des Dragiergutes gerichtet und über ebenfalls in den
Kessel hineinragende Rohre auch wieder aus diesem
abgesaugt wird, so daß sie nur über die Oberfläche
der Dragiergutfüllung streicht, sind in dieser
Druckschrift auch eine Reihe von Lösungen dargestellt,
bei denen der Luftstrom durch mindestens einen Teil
des Dragiergutes hindurch geleitet wird. Hierzu wurden
beispielsweise verschiedene Formen von Eintauchrohren
vorgeschlagen, die beispielsweise als sog. "Tauchschwert"
in das im Dargierkessel befindliche Dragiergut hineinragen. Der im Dragiergut befindliche Mündungsbereich
ist perforiert und häufig in zwei Zonen eingeteilt,
die durch eine Trennwand voneinander getrennt sind,
wobei durch die eine Zone Luft unter Druck zugeführt
wird, während sie durch die andere Zone abgesaugt wird.
Bei einer anderen in der DE-AS 27 31 351 dargestellten
Dragierkesselform erfolgt die Zuführung der Trocknungsluft in konventioneller Weise über ein über der
Dragiergutoberfläche mündendes Rohr. Abgesaugt
wird durch die Wandung des Dragierkessels hindurch,
der zu diesem Zweck mit einer Perforation versehen ist.

Die Erfindung richtet sich insbesondere auf Dragierkessel, deren Drehachse zur Horizontalen geneigt ist.
Solche Kessel haben in der Regel einen birnen-,
tulpen- oder zwiebelförmigen Querschnitt. Sie sind
üblicherweise einseitig gelagert und haben auf
der der Lagerung gegenüberliegenden Seite eine
Einfüllöffnung, die während des Betriebs mit einem
Deckel verschließbar sein kann. In einem derartigen
Kessel mit einer zur Horizontalen geneigten Drehachse ergibt sich eine relativ komplizierte dreidimensionale
Bewegung, die beispielsweise in dem Artikel von K.H.
Bauer in "Pharmazeutische Industrie" Bd. 39, 1977,
S. 149-156, eingehend beschrieben ist. Aufgrund der
Tatsache, daß in diesem Fall die Wirkungsrichtung
der Schwerkraft von der der Zentrifugalkraft bzw. der
von den Behälterwänden ausgehenden Reibungskraft
verschieden ist, wird in einem derartigen Kessel das
Dragiergut in seinem am tiefsten liegenden Bereich
etwa einer Mantellinie des Dragierkessels folgend
als aufsteigendes Gut in Richtung der Kesseldrehung schräg aufwärts transportiert. Dabei erreicht
es einen Scheitelpunkt, von dem aus es als ablaufendes
Gut entgegen der Drehbewegung des Kessels zurückfließt.
Wegen der Kesselneigung hat das absteigende Gut dabei
eine Bewegungskomponente auf die Kesselachse zu, so
daß es sich im Mittel näher bei der Kesselachse befindet, als das aufsteigende Gut. Wie aus dem zitierten
Artikel zu entnehmen ist, wird durch diese dreidimensionale Schlingerbewegung des Dragiergutes eine bessere
Durchmischung und damit eine gleichmäßigere Beschichtung als bei Verwendung eines Kessels mit
horizontaler Drehachse erreicht.

Auch für einen derarigen Kessel ist in der DE-OS 25 17 494
bereits eine Absaugeinrichtung vorgeschlagen worden,
bei der die Luft durch das Dragiergut hindurchgeführt
wird. Zu diesem Zweck ist die Kesselwandung ähnlich
wie im zuvor beschriebenen Fall perforiert ausgeführt
und die Absaugung erfolgt mit Hilfe eines außerhalb
des Kessels vorgesehenen Absaugrohres, das über eine
dicht an die Kesselaußenwand anschließende Absaugpfanne
mit der perforierten Kesselwandung in Verbindung steht.

0088317

Diese vorbekannte Einrichtung hat jedoch mehrere
Nachteile. Dadurch, daß die Luft praktisch durch
die maximale Dicke des Dragiergutes strömen muß,
ist der Strömungswiderstand und damit der vom Absaugsystem aufzubringende Unterdruck hoch. Dies wird,
wie im Rahmen der vorliegenden Erfindung erkannt wurde,
noch dadurch verstärkt, daß die in Wandnähe befindlichen Formlinge im Bereich der Absaugung sich praktisch
in Ruhe befinden und in dichter Schüttung an der Perforation anhaften. Nach dem Prinzip des geringsten
Widerstandes weicht die Luft diesem Strömungshindernis
aus und umströmt zum erheblichen Teil die Dragiergutfüllung. Weiterhin wird durch die perforierte Außenwandung die Wahrscheinlichkeit einer Beschädigung der
Formlinge erhöht und die Reinigung des Kessels erschwert.
Konstruktive Probleme ergeben sich daraus, daß die
der Luftabsaugung dienende ortsfeste Pfanne gegenüber
der Kesselaußenwand abgedichtet werden muß.

Insbesondere bei der Herstellung von Filmdragees stellt
der durch Abrieb der Formlinge im Dragiergut vorhandene
Staub, wie bereits zuvor angedeutet, ein besonderes
Problem dar. Dieser Staub haftet während des Dragiervorgangs in unkontrollierter Weise an den Formlingen
an, so daß diese eine rauhe Oberfläche und eine ungleichmäßige Beschichtung erhalten. Dadurch erfüllt
der Überzug nicht die oben erwähnten hohen Anforderungen.
Um diese Rauhigkeiten und Ungleichmäßigkeiten durch den
Abrieb zu vermeiden, werden die Formlinge vielfach
mit einer Vorisolierung versehen, indem man kleine
Teilchargen einer Kesselfüllung mit einer entsprechenden Überzugsflüssigkeit übergießt, die der Bindung des Staubes dient und zu einem besseren Gleiten des
Dragiergutes in dem Kessel führt. Dieses Verfahren

0088317

ist jedoch nicht in allen Fällen durchführbar und darüber hinaus sehr arbeitsaufwendig.

Es ist nun die Aufgabe der vorliegenden Erfindung, unter Vermeidung der zuvor beschriebenen Nachteile eine Vorrichtung zum Überziehen von Dragiergut dahingehend zu verbessern, daß ein gleichmäßiger und glatter Überzug erreicht wird. Dies soll in einem Arbeitsgang schnell und rationell möglich sein, wobei die Investitionskosten möglichst niedrig sein sollen.

Zur Lösung dieser Aufgabe wird erfindungsgemäß eine Vorrichtung der eingangs näher bezeichneten Art vorgeschlagen, die dadurch gekennzeichnet ist, daß die Absaugeinrichtung perforierte Trennwände einschließt, die im Innern des Kessels so angebracht sind, daß sie während der Drehbewegung des Kessels zumindest teilweise vom ablaufenden Dragiergut überströmt werden, und die Luftabfuhr hinter den Trennwänden derart gesteuert ist, daß momentan nicht mit dem Dragiergut in Kontakt stehende Teile der perforierten Trennwände im wesentlichen nicht mit Unterdruck beaufschlagt sind, so daß ein großer Teil der Luft durch das ablaufende Dragiergut hindurchströmt.

Die Erfindung basiert zu einem wesentlichen Teil auf der Erkenntnis, daß die Wirkung der das Dragiergut durchströmenden Luft, sowohl bezüglich des Trocknungseffektes als insbesondere bezüglich des Absaugens von störendem Staub oder Abrieb besonders gut ist, wenn die Absaugung durch das in einem Dragierkessel mit geneigter Achse in verhältnismäßig geringer Schichtdicke und verhältnismäßig schnell strömende Gut hindurch erfolgt. Dadurch werden die notwendigen perforierten Trennwände relativ schnell und unter geringem Druck überströmt, wobei die Formlinge eine relativ geringe Packungsdichte haben. Überraschenderweise wird durch diese einfache Maßnahme eine praktisch vollständige Entfernung von Abrieb und Staub aus der Dragiergutfüllung erreicht, so daß sich eine völlig glatte Beschichtung ergibt. Darüber hinaus wird durch die erfindungsgemäße Einrichtung eine intensive Trocknung erreicht, die zu einer erheblichen Reduktion der notwendigen Dragierzeiten führt.

Besonders vorteilhaft sind die perforierten Trennwände so angeordnet, daß ein möglichst großer Teil des ablaufenden Dragiergutes möglichst breitflächig und damit in geringer Schichtdicke über sie hinwegströmt. Dabei spielt es keine wesentliche Rolle, ob ein Teil der perforierten Trennwände sich in bestimmten Betriebszuständen auch in den Bereich des aufsteigenden und sich relativ zur Kesselwandung nur wenig bewegenden Dragiergutes erstreckt, wichtig ist für einen guten Effekt bei möglichst geringem Energieaufwand (der sich im wesentlichen aus der notwendigen Luftmenge und dem zu überwindenden Strömungswiderstand ergibt) nur, daß ein möglichst großer Teil der von der Absaugeinrichtung geförderten Luft durch einen möglichst großen Teil des relativ nah bei der Achse des Dragierkessels ablaufenden Dragiergutes gefördert wird.

Besonders bevorzugt sind deshalb die perforierten Trennwände nahe der Trommelachse, insbesondere in Form eines Kegelstumpfes drehfest bezüglich der Trommel montiert. Dadurch drehen sie sich mit der Trommel dem ablaufenden Gut entgegen und durch die resultierende hohe Relativgeschwindigkeit wird die Effektivität der erfindungsgemäßen Einrichtung weiter erhöht.

Besonders bevorzugt wird im Zusammenhang mit der erfindungsgemäßen Vorrichtung als Einrichtung zum Besprühen der Formlinge mit der Dragiersuspension ein Tauchrohr verwendet, **wie es** insbesondere **in der** DE-PS 20 29 839 beschrieben wird. Durch dieses Tauchrohr wird der Sprühstrahl mit einem ihn umgebenden Luftstrom in die Menge der Formlinge hineingerichtet, wobei er vorzugsweise in die Hauptbewegungsrichtung der Formlinge gelenkt wird. Bei der kombinierten Verwendung eines Tauchrohres mit der erfindungsgemäßen Vorrichtung wird eine besonders schnelle und gleichmäßige Dragierung bei geringem Energieaufwand ermöglicht.

Weitere erfindungsgemäß wesentliche konstruktive Maßnahmen und die damit erzielten Vorteile sind der folgenden Beschreibung eines Ausführungsbeispiels der erfindungsgemäßen Vorrichtung anhand der Figuren zu entnehmen. Es zeigen:

Fig. 1 - eine erfindungsgemäße Dragiervorrichtung in seitlicher Aufsicht, teilweise im Schnitt,

Fig. 2 - eine stark schematisierte Frontalansicht einer erfindungsgemäßen Dragiervorrichtung zur Verdeutlichung von deren Betriebsweise,

Fig. 3 - eine bevorzugte Ausführungsform einer Absaugeinrichtung.

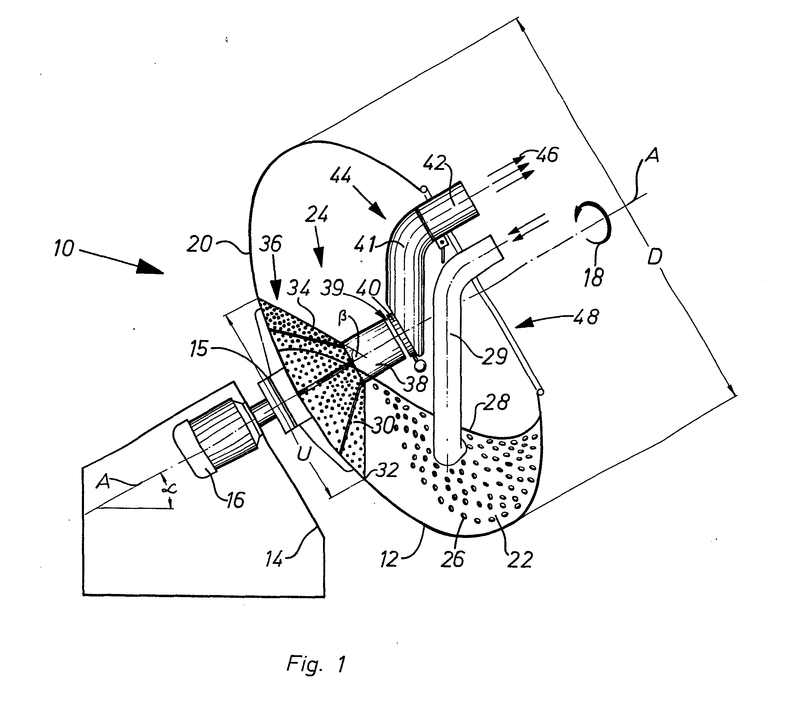

In Fig. 1 erkennt man eine in ihrer Gesamtheit mit dem Bezugszeichen 10 versehene Dragiervorrichtung, deren Hauptbestandteil der zwiebelförmige Kessel 12 ist, der über einen Flansch 15 mit einem Antrieb 16 verbunden ist, der in üblicher Weise aus einem elektrischen Motor und einem Getriebe bestehen kann. Die einseitige Lagerung ist mit 14 bezeichnet. Der Kessel dreht sich im Betrieb in Richtung des Pfeiles 18 um die Achse A, die um einen Winkel α gegen die Horizontale geneigt ist, der im dargestellten Ausführungsbeispiel 30$^{\circ}$ beträgt.

Die Wandung 20 des Dragierkessels 12 ist im Schnitt
dargestellt, so daß man in seinem Innern das Dragiergut 22 und die in ihrer Gesamtheit mit dem Bezugszeichen 24 versehene Absaugeinrichtung erkennen kann.
Das Dragiergut 22 besteht aus einer Vielzahl nur
schematisch angedeuteter Formlinge 26, die beim
Dragiervorgang mit einem Überzug versehen werden.
Zu diesem Zweck ist ein Tauchrohr 29 vorhanden, das
lediglich schematisch angedeutet ist. Einzelheiten zu
dessen Funktionsweise sind der DE-PS 20 29 839 zu entnehmen.
Mit dem Bezugszeichen 28 ist die Begrenzungslinie
des Dragiergutes in der dargestellten Seitenansicht
während der Kesselbewegung bezeichnet.

Zu der Absaugeinrichtung 24 gehören perforierte Trennwände 30, die im dargestellten Ausführungsbeispiel
konisch um die Rotationsachse herum angeordnet sind.
Statt mehrerer glattflächig miteinander verbundener Trennwände 30 kann der Konus bei der dargestellten Konstruktion
vorteilhaft auch aus einem Stück perforiertem Blech hergestellt sein, so daß auf seinem gesamten Umfang nur eine
Naht notwendig ist. Die Perforation muß so gestaltet sein,
daß kesselseitig keine scharfen Kanten vorhanden sind, die
die Formlinge 26 beschädigen könnten. Die geeignete Dimensionierung der Löcher 34 in den perforierten Trennwänden 30 läßt sich empirisch bestimmen. Die perforierten
Trennwände können auch siebartig, beispielsweise aus
sich überkreuzenden Lagen von Drähten aufgebaut sein.

Der untere Umfang 32 des Kegels 36 aus perforierten Trennwänden 30 verläuft bevorzugt kreisförmig um die
Achse A und ist mit der Kesselwandung 20 fest verbunden,
so daß die Trennwände 30 drehfest zum Kessel 12 mit
diesem verbunden sind.

Der Kegelstumpf 36 der perforierten Trennwände 30
geht an seinem oberen Ende in ein zur Achse A koaxiales, mit ihm fest und dicht verbundenes Rohr 38 über, durch das Luft abgesaugt werden kann. An das Rohr 38 schließt sich über eine Blende 40 ein im dargestellten Fall aus zwei Teilen 41 und 42 bestehendes Absaugrohr 44 an, das in nicht dargestellter Weise ortsfest montiert ist und zu einer entsprechenden nicht dargestellten Luftfördereinrichtung, beispielsweise einem Mitteldruckventilator führt, durch die die Luft in der durch die Pfeile 46 angedeuteten Weise angesaugt wird. Das Absaugrohr verläuft bei der dargestellten bevorzugten Ausführungsform durch die Einfüllöffnung 48 des Kessels 12 hindurch, der vielfach von einem nicht dargestellten Deckel verschlossen wird, der mit einer entsprechenden Aussparung für das Absaugrohr 44 versehen und ebenfalls ortsfest gelagert ist, d.h. sich nicht mit dem Kessel 12 dreht.

Für die vorliegende Erfindung ist nun wesentlich, daß die Luftabfuhr hinter den perforierten Trennwänden 30 derart gesteuert ist, daß nur die Teile der Trennwände, die zu einem gegebenen Zeitpunkt mit Dragiergut 22 im Kontakt stehen, mit Unterdruck beaufschlagt werden, d.h. daß nur durch diese Teile der perforierten Trennwände 30 hindurch die Absaugung erfolgt.

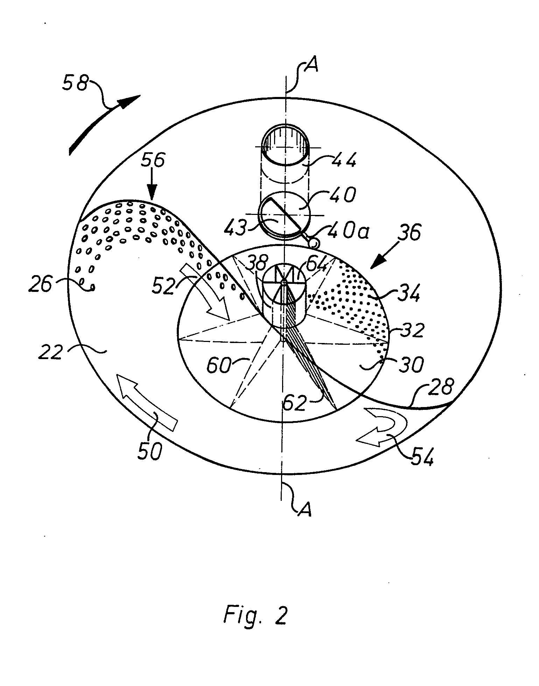

Dies ist in Fig. 2 näher dargestellt, aus der zugleich der typische Verlauf der Dragiergutbewegung in schematisierter Weise zu entnehmen ist. Fig. 2 zeigt in einer schematischen perspektivischen Darstellung den Kegelstumpf 36 der Trennwände 30 mit dem daran befestigten Rohr 38. Darüber erkennt man in einer auseinandergezogenen Darstellung die mit einem Handgriff 40a verstellbare Blende 40, die mit dem Absaugrohr 44 verbunden ist. Die Achse A des lediglich schematisch im Schnitt dargestellten Kessels 12 verläuft in dieser Darstellung schräg aus der Zeichenebene heraus, dergestalt, daß ihre Projektion auf die Zeichenebene senkrecht ist.

- 11 -

0088317

Die Pfeile 50, 52 und 54 sollen die für einen Dragierkessel mit schrägliegender Achse typische dreidimensionale Schlingerbewegung des Dragiergutes 22 andeuten. Der Pfeil 50 markiert das aufsteigende Gut, das im wesentlichen einer Mantellinie des Kessels 12 folgend durch die Reibungskräfte zwischen dem Dragiergut 22 und der Kesselwandung 20 nach oben befördert wird, bis es einen mit dem Pfeil 56 angedeuteten Scheitelpunkt erreicht, an dem die Schwerkraft die auf das Dragiergut wirkenden Reibungskräfte überwiegt, was dazu führt, daß das Dragiergut als ablaufendes Gut 52 nach unten fließt. Wie dem eingangs zitierten Artikel von K.H. Bauer zu entnehmen ist, ist die Schichtdicke des ablaufenden Gutes 52 erheblich geringer als die des aufsteigenden Gutes 50. Das Tauchrohr 29 taucht weitgehend in das ablaufende Gut 52 ein, wobei aus dessen in der Figur nicht sichtbaren Öffnung Dragiersuspension und Luft, wie in der DE-PS 20 29 839 beschrieben, in das Dragiergut 22 eingeblasen wird.

Weiterhin ist der Fig. 2 andeutungsweise zu entnehmen, daß das ablaufende Gut bei der Bewegung des Kessels 12 in Richtung des Pfeiles 58 wegen der Schräglage der Achse A eine Komponente auf die Kesselachse A zu hat und sich deswegen im Mittel näher bei der Achse A befindet, als das aufsteigende Gut. Wenn nun, wie in der dargestellten bevorzugten Ausführungsform, die perforierten Trennwände 30 in der Nähe der Achse A angeordnet sind, werden sie zu einem erheblichen Teil von dem ablaufenden Gut 52 überströmt. Da die Trennwände 30 bevorzugt mit dem Kessel 12 drehfest verbunden sind, drehen sie sich dem ablaufenden Gut 52 entgegen, wodurch sich die Relativgeschwindigkeit zwischen ablaufendem Gut 52 und Trennwänden 30 zusätzlich erhöht. Dadurch erfolgt die Absaugung durch ein relativ zu der Perforation 34 sehr schnell, in relativ geringer Schichtdicke und in lockerer Schüttung sich bewegendes Dragiergut 22 hindurch. Dies führt zu einer besonders wirksamen Trocknung der Dragees, wobei gleichzeitig ein Festsetzen der Dragees auf den perforierten Trennwänden 30 vermieden wird und der Energiebedarf wegen der im Vergleich zu den vorbekannten Einrichtungen reduzierten notwendigen Luftmengen und Druckunterschieden erheblich vermindert ist.

Die erfindungsgemäße Steuerung der Luftabfuhr hinter den Trennwänden 30 erfolgt bei der dargestellten bevorzugten Ausführungsform dadurch, daß hinter den perforierten Trennwänden 30, also auf deren von dem Dragiergut 22 abgewandten Seite, sich parallel zu der Drehachse A erstreckende Absperrwände 62 vorgesehen sind, die diese Drehachse sternförmig umgeben und mit dem Kessel 12 drehfest verbunden sind, so daß sie sich mit diesem mitdrehen. Die Absperrwände 62 sind sowohl dem Kesselboden als auch der Mantelfläche des Kegels 36 der Trennwände 30 exakt angepaßt. Dadurch bilden sie Absaugkammern 60, die gegeneinander abgedichtet sind.

Die Absperrwände 62 und damit auch die Absaugkammern 60 erstrecken sich in das Rohr 38 hinein. An die Öffnungen 64 der Kammern 60 schließt sich, nur durch einen sehr kleinen Spalt 39 von beispielsweise 2mm Breite getrennt (vgl. Fig. 1), die verstellbare Blende 40 an. Dieser folgt in der zuvor beschriebenen Weise das Absaugrohr 44 und die Absauganlage, bestehend aus Filtern und einem Ventilator.

Durch diese bevorzugte Konstruktion wird auf einfache Weise erreicht, daß nur von den Teilen der Trennwände 30 Luft abgesaugt wird, die während der Drehbewegung des Kessels 12 von Dragiergut 22 bedeckt sind. Die Größe dieses Bezirks läßt sich durch entsprechende Gestaltung der Öffnung 43 der Blende 40 und durch die Anzahl und Größe der Kammern 60 leicht variieren. Durch Verdrehen der Blende 40 läßt sich die Beaufschlagung der Absaugkammern 60 zusätzlich den Verhältnissen entsprechend einstellen. Selbstverständlich gibt es auch eine Reihe anderer möglicher Konstruktionen zur Steuerung der Luftabfuhr hinter den perforierten Trennwänden 30, insbesondere könnte hinter dem Konus 36 eine Absaugpfanne vorhanden sein, die sich unter denjenigen Bereichen der perforierten Trennwände 30 erstreckt, die von dem Dragiergut 22 und insbesondere von dem ablaufenden Gut 52 beaufschlagt werden. Wie weiter oben erwähnt, ist es dabei unschädlich, wenn sich Teile der perforierten Trennwände 30 in einem Bereich befinden, der zum Teil auch von aufsteigendem Gut bedeckt ist. Wichtig ist, daß die Luftströmung in solchen Fällen zum erheblichen Teil, mindestens etwa zur Hälfte, bevorzugt mindestens zu drei Viertel, durch das ablaufende Gut 52 erfolgt.

Bevorzugt ist die Dimensionierung und Formgebung des Kessels 12, die Neigung der Drehachse und die Füllmenge des Dragiergutes 22 so aufeinander abgestimmt, daß das Dragiergut 22 während der Bewegung des Kessels 12 wie in Fig. 2 dargestellt unterhalb der Achse A durchläuft, d.h. die Drehachse verläuft in diesem Fall nicht durch das Dragiergut hindurch. Dadurch ergibt sich ein besonders glatter Verlauf des Dragierguttransportes in dem Kessel 12.

Die Drehachse des Kessels ist bevorzugt um einen Winkel $\alpha = 20\text{-}40^{\circ}$ gegenüber der Horizontalen geneigt. Der in Fig. 1 eingezeichnete Winkel ß zwischen dem Mantel des Kegelstumpfes 36 und der Drehachse A ist relativ unkritisch. Besonders bewährt haben sich Winkel ß zwischen 60 und 75$^{\circ}$, es sind jedoch auch Konstruktionen möglich, bei denen der Kegel zu einer flachen Scheibe (ß = 90°) oder im anderen Extrem zu einem Zylinder in Fortsetzung des Rohres 38 (ß = 0°) entartet.

Der Durchmesser U des Umfangs 32 des Kegelstumpfes 36 beträgt bevorzugt etwa 35-60 % des Trommeldurchmessers D, um die Absaugluft optimal zur Wirkung zu bringen. Soweit die perforierten Trennwände 30 nicht kegelstumpfförmig gestaltet sind, sollte sich bevorzugt der Wirkungsbereich der Luftabsaugung entsprechend weit in die Dragiergutfüllung 22 hinein erstrecken.

Die dargestellte bevorzugte Konstruktion zeichnet sich besonders durch einen äußerst einfachen Aufbau und damit günstige Investitionskosten aus. Insbesondere ist zwischen dem sich drehenden Kegelstumpf 36 bzw. dem damit verbundenen Rohr und der Blende 40 keine aufwendige Dichtung notwendig. Die Luftabfuhr erfolgt durch die ohnehin vorhandene Kesselöffnung hindurch, so daß auch hier keine beweglichen Dichtelemente erforderlich sind. Der dargestellte Kessel ist insgesamt glattflächig aufgebaut, so daß er sich im Gegensatz zu den vorbekannten Dragierkesseln mit perforierter Wandung einfach reinigen läßt. Bevorzugt ist der aus den Trennwänden 30 gebildete Kegelstumpf 36 so eingebaut, daß er einfach abgenommen und damit von beiden Seiten gründlich gereinigt werden kann. Schließlich erlaubt die dargestellte bevorzugte Konstruktion ein Nachrüsten von bereits vorhandenen Dragierkesseln zu einer erfindungsgemäßen Vorrichtung.

Die kegelstumpfförmige Konstruktion der perforierten Trennwände 30 oder eine ähnlich glattflächige andere Gestaltung hat weiterhin den Vorteil, daß er auf den Lauf der Formlinge nicht hemmend wirkt und im Gegenteil zu einer äußerst wirksamen Durchmischung des
Dragiergutes 22 beiträgt, während bei den vorbekannten
Einrichtungen gerade an dieser Stelle, wie dem Fachmann
geläufig ist, bei der Zuckerdragierung frisch besprühte Formlinge leicht an der Kesselwand kleben
bleiben.

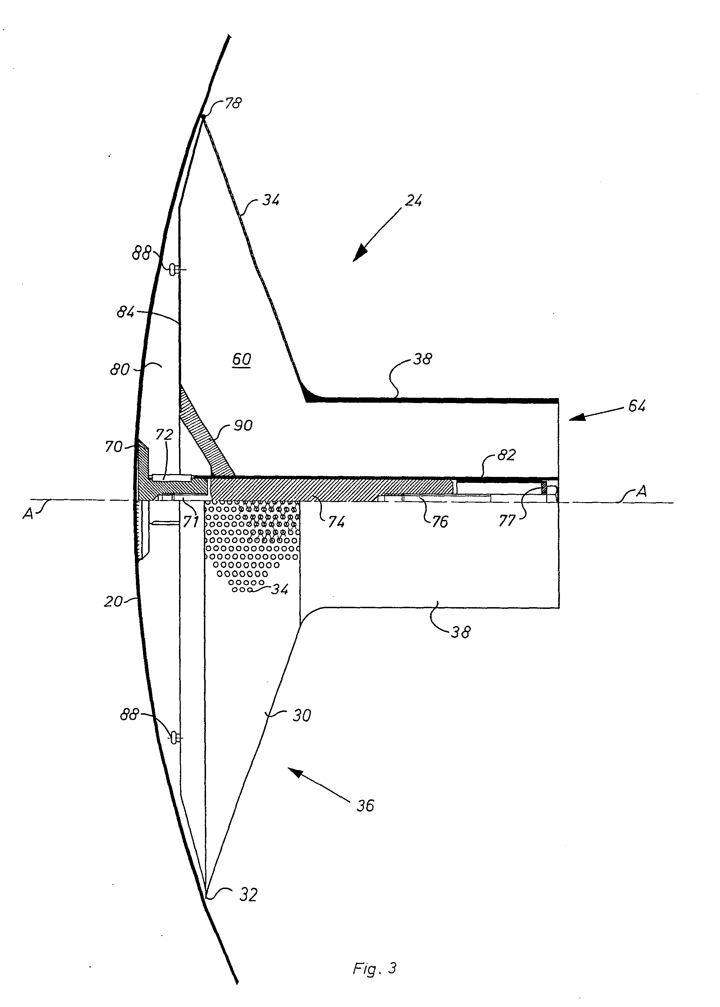

Fig. 3 zeigt eine besonders bevorzugte Ausführungsform
einer Absaugvorrichtung 24. Die Kesselwand 20 ist hierbei im Schnitt, die übrigen Teile in der oberen Hälfte
der Figur im Schnitt, in der unteren Hälfte als Ansicht
dargestellt.

In der Kesselmitte ist ein Zapfen 70 an die Kesselwand
20 angeschweißt. Eine Zapfenverlängerung 74 dient als
Einführhilfe und ist mit dem Zapfen 70 verschraubt.
Sie erstreckt sich als Verlängerung des Zapfens 72 in
Richtung der Achse A.

Auf die Zapfenverlängerung 74 ist die Absaugvorrichtung
24 geschoben und mit einer Schraube 76 angezogen, die
sich gegen einen Steg 77, der mit dem Rohr 82
74 fest verbunden ist, abstützt. Dabei ist der untere
Rand 32 des Kegelstumpfes 36 mittels der Dichtung 78
gegen den Kesselboden abgedichtet, damit keine Formlinge in den Hohlraum 80 gelangen können. Über die
Paßfedern 72 wird die Drehung des Kessels auf das Rohr
82 übertragen, das über ein konisch ausgebildetes Leitblech 90 mit dem Bodenblech 84 der Absaugeinrichtung 24
fest verbunden ist. Die konische Ausbildung des Leitblechs
90 ist einerseits aus Stabilitätsgründen günstig und vermeidet andererseits scharfe Ecken und Winkel, in die sich
größere Partikel, die durch die der Übersichtlichkeit halber
nur teilweise dargestellten Löcher 34 aus dem Dragiergut
22 abgesaugt werden, absetzen könnten. Die Abdichtung der
Absperrkammern 60 zum Kesselboden hin wird bei dieser
Ausführungsform durch das Bodenblech 84 vorgenommen, das zum Reinigen der von den Formlingen abgewandten Seite der im dargestellten Beispiel einstückig ausgeführten perforierten Trennwand 30 mittels Spreizköpfen 88 leicht entfernt werden kann.

Das Ausführungsbeispiel nach Fig. 3 zeigt besonders deutlich, daß die erfindungsgemäße Einrichtung sich neben den bereits erwähnten Vorteilen durch eine kompakte Bauweise auszeichnet. Dadurch ist sie einerseits leicht von einem Mann auszuwechseln oder, wenn in bestimmten Fällen in dem gleichen Dragierkessel ohne Absaugung gearbeitet werden soll, ganz zu entfernen, andererseits nimmt die erfindungsgemäße Absaugvorrichtung nur einen sehr geringen Anteil des Kesselvolumens ein, so daß dessen Füllvolumen praktisch unverändert bleibt.

Beispiel:

## Dragiertrommel

| | |
|---|---|
| Form: | zwiebelförmig |
| Fassungsvermögen: | 300 kg |
| Neigung: | $30^{\circ}$ |
| Drehzahl: | 18 $\text{min}^{-1}$ |
| Durchmesser D: | 1600 mm |

## Konus

| | |
|---|---|
| Durchmesser U: | 700 mm |
| Lochdurchmesser der Performation: | 2,5 mm |
| Anzahl der Absaug- kammern: | 6 |
| Winkel ß: | $60^{\circ}$ |

### Abluft

| | |
|---|---|
| Abluftmenge: | 800 $\text{m}^3/\text{h}$ |
| Druckverlust (ohne Filter und Rohr- leitung): | 0,0065 bar |

### Sonstige Versuchs- daten

| | |
|---|---|
| Tabletteneinlage | 1 Mio Stück = 200 kg |
| Tabl.-Durchmesser: | 8 mm |
| Tabl.-Härte: | 4 kp |
| Sprührate: | 1 90g/min |
| Sprühdauer: | 1 Std., 45 Min. |

## Versuchsverlauf

Zu Beginn der Filmdragierung war nur in den ersten 2 - 5 Minuten etwas Staub zu sehen. Anschließend war kein Staub mehr festzustellen, auch wenn die Öffnung der Dragiertrommel nicht abgedeckt war. Die beschichteten Formlinge haben danach eine äußerst glatte und glänzende Oberfläche. Die Dragierzeit konnte im Vergleich zu einer Absaugung über dem Dragiergut mit der Vorrichtung auf die Hälfte reduziert werden.

0088317

Patentansprüche

1. Vorrichtung zum Überziehen eines Dragiergutes (22)
   aus Formlingen (26) wie Tabletten, Pellets und
   dergl. mit

   - einem um eine Achse (A) drehbaren Kessel (12),
   - eine Einrichtung(29)zum Besprühen der Formlinge (26)
     mit einer Dragiersuspension, während die Formlinge
     (26) in dem Kessel (12) bewegt werden und
   - eine Absaugeinrichtung (24) zum Absaugen von Luft
     und Drageestaub durch mindestens einen Teil des
     Dragiergutes (22) hindurch,
   - wobei die Drehachse (A) des Kessels (12) derart
     zur Horizontalen geneigt ist, daß das Dragiergut
     eine dreidimensionale Schlingerbewegung durchführt,
     bei der das aufsteigende Gut (50) sich im Mittel
     in einer größeren Entfernung von der Achse (A)
     als das ablaufende Gut (52) befindet, dadurch
     gekennzeichnet,
   - daß die Absaugeinrichtung (24) eine oder mehrere perforierte Trennwände (30) einschließt, die im Innern des Kessels
     (12) so angebracht sind, daß sie während der Drehbewegung des Kessels (12) vom ablaufenden Dragiergut (52) überströmt werden und
   - die Luftabfuhr hinter den Trennwänden (30) derart
     gesteuert ist, daß momentan nicht mit dem Dragiergut (22) in Kontakt stehende Teile der perforierten
     Trennwände (30) im wesentlichen nicht mit Unterdruck beaufschlagt sind,
   - so daß ein großer Teil der Luft durch das ablaufende
     Gut (52) hindurchströmt.

2. Vorrichtung nach Anspruch 1, dadurch gekennzeichnet, daß die Form des Kessels (12), der Neigungswinkel der Drehachse (A) und die bestimmungsgemäße Füllmenge des Kessels (12) so aufeinander abgestimmt sind, daß die Drehachse (A) nicht durch das Dragiergut (22) verläuft.

3. Vorrichtung nach Anspruch 1 oder 2, dadurch gekennzeichnet, daß die Drehachse (A) des Kessels (12) um einen Neigungswinkel $\alpha$ zwischen 20 und 40$^{\circ}$ gegen die Horizontale geneigt ist.

4. Vorrichtung nach einem der Ansprüche 1-3, dadurch gekennzeichnet, daß die perforierten Trennwände (30) in der Umgebung der Drehachse (A) drehfest bezüglich des Kessels (12) befestigt sind, so daß sie sich mit dem Kessel (12) entgegen dem ablaufenden Gut (52) bewegen und daß hinter den perforierten Trennwänden (30) Absperrwände (62) zur Steuerung der Luftabfuhr vorhanden sind.

5. Vorrichtung nach einem der Ansprüche 1-4, dadurch gekennzeichnet, daß die perforierten Trennwände (30) im wesentlichen kegelförmig um die Drehachse (A) des Kessels (12) ausgebildet sind, wobei der untere Kegelumfang (U) auf der Innenwandung des Kessels (12) kreisförmig um die Achse (A) verläuft und die Absaugeinrichtung (24) ein ebenfalls mit der Drehachse (A) koaxiales Rohr (38) einschließt, das mit einem durch die Kesselöffnung (48) verlaufenden Absaugrohr (44) in Verbindung steht.

6. Vorrichtung nach Anspruch 5, dadurch gekennzeichnet, daß die Mantellinie der kegelförmigen Anordnung der perforierten Trennwände (30) einen Winkel ß

0088317

von 60-75° zu der Drehachse (A) bildet und daß
der Durchmesser des unteren Kegelumfangs (U)
35-60 % des Durchmessers (D) des Kessels (12)
beträgt.

7. Vorrichtung nach einem der Ansprüche 3-6, dadurch
gekennzeichnet, daß der Dragierkessel (12) zwiebelförmig ausgebildet ist, die Drehachse (A) unter
einem Winkel α von etwa 30° zur Horizontalen verläuft und die Luftabfuhr hinter den perforierten
Trennwänden (30) so gesteuert ist, daß etwa die
Hälfte der Fläche der perforierten Trennwände (30)
jeweils mit Unterdruck beaufschlagt ist.

8. Vorrichtung nach einem der Ansprüche 1-7, dadurch
gekennzeichnet, daß die Einrichtung zum Besprühen
ein Tauchrohr, insbesondere gemäß DE-PS 20 29 839
einschließt.

BOEHRINGER MANNHEIM GMBH 2481

*Fig. 1*

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-1 441 370 (CIBA AG) <br> * Seite 1, Zeilen 1-3; Seite 11, Zeilen 16-27; Seite 12, Zeilen 1-22; Figuren 1-3 * | 1 | A 61 J 3/00 <br> A 23 G 3/26 |
| A | US-A-3 834 347 (FREUND INC. CO.) <br> * Spalte 2, Zeilen 55-68; Spalte 3, Zeilen 1-24; Figuren 1-4 * | 1 | |
| A,D | DE-A-2 731 351 (FREUND IND. CO.) <br> * Insgesamt * | 1 | |
| A,D | DE-A-2 517 494 (FREUND IND. CO.) <br> * Insgesamt * | 1 | |
| A,D | DE-A-2 029 839 (BOEHRINGER MANNHEIM) <br> * Insgesamt * | 1,8 | RECHERCHIERTE SACHGEBIETE (Int. Cl. ³) <br><br> A 61 J <br> A 23 G <br> B 01 J |

Der vorliegende Recherchenbericht wurde für alle Patentansprüche erstellt.

| Recherchenort <br> DEN HAAG | Abschlußdatum der Recherche <br> 09-05-1983 | Prüfer <br> BAERT F.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03.82